(19) Europäisches Patentamt
European Patent Office
Office européen des brevets

(11) **EP 3 278 549 B1**

(12) **EUROPEAN PATENT SPECIFICATION**

(45) Date of publication and mention
of the grant of the patent:
**19.12.2018 Bulletin 2018/51**

(51) Int Cl.:
***H04M 11/06*** (2006.01)    ***H04B 3/487*** (2015.01)

(21) Application number: **16712904.8**

(22) Date of filing: **31.03.2016**

(86) International application number:
**PCT/EP2016/057067**

(87) International publication number:
**WO 2016/156498 (06.10.2016 Gazette 2016/40)**

(54) **COMMUNICATION DEVICES AND METHODS**

KOMMUNIKATIONSVORRICHTUNGEN UND VERFAHREN

DISPOSITIFS ET PROCÉDÉS DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2015 US 201562141294 P**
**14.04.2015 US 201562146996 P**

(43) Date of publication of application:
**07.02.2018 Bulletin 2018/06**

(73) Proprietor: **Lantiq Beteiligungs-GmbH & Co. KG**
**85579 Neubiberg (DE)**

(72) Inventors:
• **OKSMAN, Vladimir**
**Morganville, New Jersey 07751 (US)**
• **STROBEL, Rainer**
**80331 Munich (DE)**

(74) Representative: **Sticht, Andreas**
**Kraus & Weisert**
**Patentanwälte PartGmbB**
**Thomas-Wimmer-Ring 15**
**80539 München (DE)**

(56) References cited:
**EP-A2- 2 728 819      WO-A1-2010/060086**
**WO-A1-2013/141840      US-A1- 2014 328 442**

**Description**

TECHNICAL FIELD

The present application relates to communication devices and methods, for example wire-based communication devices and methods.

BACKGROUND

Nowadays, internet access is provided to many households via conventional telephone lines, e.g. copper lines. The data rates available via such copper lines have continuously increased over the years. Initially, modems using essentially a voice bandwidth of the telephone lines provided comparatively low data rates. With the development of digital subscriber line (DSL) techniques, data rates were significantly increased by using frequency ranges above a frequency range used for voice communication. With VDSL (Very High Bit Rate DSL) and VDSL2 systems using vectoring as defined in ITU-T recommendation G.993.5, data rates up to 100 Mbit/s became available. Vectoring is a technique to cancel or reduce crosstalk between adjacent lines by joint processing at a transmitter or a receiver (typically on a provider side), which allows higher data rates.

However, for some applications even higher data rates up to 1.0 Gbit/s are desirable.

To achieve such data rates via copper lines, the copper lines need to be short, only up to 50 to 100 meters. Operation using such short loops requires installation of many small street multiple dwelling units (MDU) cabinets called distribution points (DPs) which are installed close to the customers and serve a comparatively small number of customers compared to previous DSL installations, for example 16 or 24 customers. Such distribution points are then connected to a backbone network via fiber optics. This approach is also referred to as "fiber to the distribution point" (FTTdp).

Furthermore, to achieve such high data rates over copper wires, the used frequency spectrum is increased up to about 100 MHz (e.g. 106 MHz) or even about 200 MHz (e.g. 212 MHz). Such high data rates are for example specified in the G.fast standard (described e.g. in ITU-T Recommendations G.9700 of 04/2014 and G.9701 of 12/2014 and preparatory works therefor). Crosstalk between wire pairs of different subscribers becomes even more substantial at such high frequencies, such that crosstalk cancellation techniques need to be used. Most distribution points using frequencies up to 100 MHz FTTdp use linear precoding techniques similar to the vectoring used in VDSL systems. In such linear precoding techniques, essentially data units to be transmitted via a plurality of different subscriber lines are multiplied with a matrix having non-diagonal elements, such that over the lines essentially "mixtures" of data units intended for different lines are transmitted. This "mixture" is performed such that it is cancelled out by the crosstalk, crosstalk also leading to such a "mixing", such that in an ideal case the originally intended data units are received. Precoding is usually used in the downstream direction from distribution point to a subscriber, while in the upstream direction a similar technique, often referred to as cancellation or equalization, is used, where the received data units are multiplied by a matrix compensating the previously experienced crosstalk.

For higher frequencies, for example in FTTdp systems using frequencies up to 200 MHz, due to the increased crosstalk linear precoding may not be sufficient for compensating the crosstalk. In such systems, non-linear precoding, for example Tomlinson Harashima precoding, may be used to suppress crosstalk.

Generally, because of the high frequencies used in G.fast the transmission channel as well as background noise is more volatile and may change on comparatively short timescales, such that continuous monitoring of the channel and noise conditions is desirable to be able to react to changes. However, conventionally a single measurement of test parameters, attenuation, cross-coupling coefficients and background noise is performed during a link training phase, and it is assumed that the parameters remain constant thereafter.

US 2014/328442 A1 describes crosstalk mitigation for a vectored DSL transmission using an orthogonal probe sequence using "0" elements (columns in the W matrix). EP 2 728 819 A2 disclose channel estimation using test sequences with three different elements (-1, +1, 0). WO 2010/060086 A1 describes fault detection in a DSL line using HLOG, QLN and PSD measurements.

SUMMARY

Devices, methods and systems as defined in the independent claims are provided. The dependent claims define further embodiments.

The above summary is merely intended to give a brief overview over some aspects and features of some embodiments and is not be construed as limiting. Other embodiments may comprise different features, alternative features, less features and/or additional features.

BRIEF DESCRIPTION OF THE DRAWINGS

Fig. 1 illustrates a system according to an embodiment.

Fig. 2 illustrates a system according to an embodiment focusing on a downstream direction.

Fig. 3 is a flowchart illustrating a method according to an embodiment.

Fig. 4 is a schematic diagram illustrating techniques according to some embodiments.

Fig. 5 is a flowchart illustrating a method according to an embodiment.

DETAILLED DESCRIPTION

In the following, various embodiments will be described in detail referring to the attached drawings. These embodiments are to be taken as illustrative examples only and are not to be construed as limiting. For example, while an embodiment may be described as comprising a plurality of features or elements, this is not to be construed as indicating that all these features or elements are necessary for implementation of embodiments. Instead, other embodiments may comprise alternative features and/or less features than the ones explicitly described and shown in the drawings. Moreover, additional elements or features apart from the ones explicitly described and shown may be provided.

For example, some embodiments relate to digital subscriber line (DSL) systems. Such embodiments may comprise additional features commonly employed in DSL systems, for example features defined by the various DSL standards. DSL in this context may refer to any DSL "flavor" like ADSL, VDSL, VDSL2 or G.fast.

However, while embodiments will be described in the context of DSL systems, e.g. G.fast systems, techniques described herein may also be applied to other kinds of communication, for example wireless communication.

Modifications and variations described with respect to one of the embodiments may also be applicable to other embodiments. Features from different embodiments may be combined to form further embodiments.

References like left, right, top, bottom etc. when referring to the figures serve merely for easy referral to certain elements of the figures and are not to be construed as indicating any actual spatial relationship of the elements in implementations.

The term "communication connection" is used herein to refer to both wireless connections and wire-based connections. While for illustration purposes mainly wire-based connections will be used, techniques disclosed herein may also be applied to wireless connections.

Various embodiments use specific training signals, specific feedback channels and/or specific evaluation methods of the feedback to obtain parameters regarding a channel regarding crosstalk, noise and the like. The techniques described herein may in particular be applied to xDSL (digital subscriber line) systems, for example as additions to the G.fast systems as specified in ITU-T recommendations G.9700 of April 2014 and G.9701 of December 2014 and preparatory works for these standards. In addition to elements and features specifically set forth herein, and the features, components or elements conventionally employed in xDSL systems, for example in conventional G.fast systems, may be employed. As the application and incorporation of such elements per se is within the capabilities of the skilled person, such elements, features or components will not be described in detail herein.

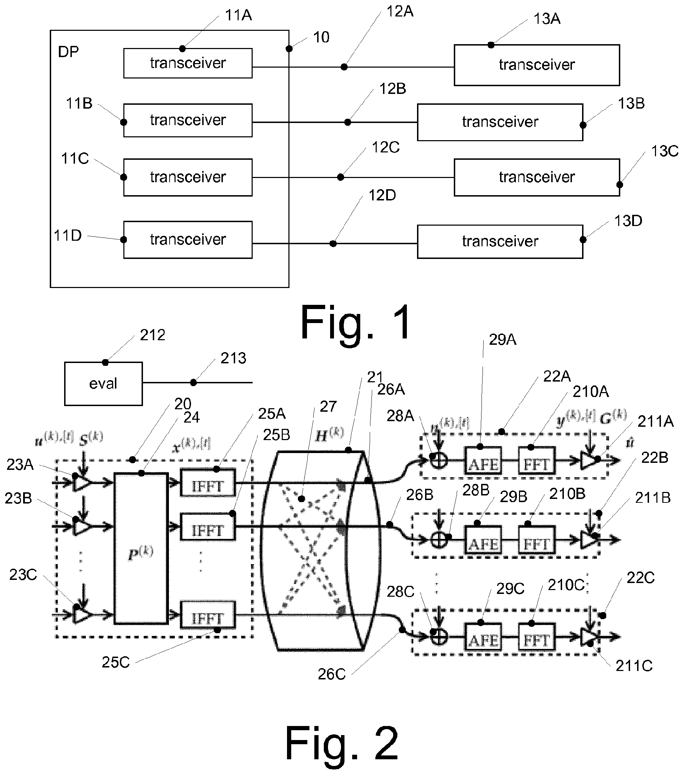

Turning now to the Figures, Fig. 1 illustrates an example system according to an embodiment. The system of Fig. 1 comprises a distribution point 10 serving a plurality of customer premises equipment (CPE) transceivers 13A-13D via respective communication lines (for example copper lines) 12A to 12D. For each CPE transceiver 13A-13D, distribution point 10 comprises a corresponding transceiver 11A to 11D. Transceivers 11A to 11D may share common elements, for example a precoder for crosstalk precompensation in downstream direction (i.e. from distribution point 10 to transceivers 13A to 13D) or a crosstalk equalizer (also referred to as crosstalk cancellation device) for the upstream direction (i.e., communication direction from transceivers 13A to 13D to distribution point 10. While four transceivers 13A to 13D and four corresponding communication lines 12E to 12D are shown, this is merely by way of example, and any suitable number of CPE transceivers depending on the capabilities of distribution point 10 may be used. In embodiments, communication via at least some of communication lines 12A to 12D is based on an xDSL (digital subscriber line) communication, for example as a G.fast communication. Communication via communication lines 12A to 12D may be subject to influences like noise, crosstalk etc. To evaluate and possibly compensate such influences, channel test monitoring is performed in the system of Fig. 1.

Generally, to determine properties of a channel, test signals which are known to the respective receiver (on CPE side or distribution point side) are transmitted and parameters describing the transmission are determined based on a difference between received signals and the known sent signals. For example, error signals or other feedback may be used. For example, channel properties like noise or crosstalk may be determined. Specific techniques for such channel monitoring which may be employed in the embodiment of Fig. 1 will be described below in further detail.

While a distribution point (DP) 10 is used in the system of Fig. 1 as an example for a provider side equipment, any other provider side equipment serving a plurality of CPE receivers, for example a DSLAM (digital subscriber line access multiplexer), may be used in other embodiments.

A communication direction from DP 10 to transceivers 13A to 13D will be referred to as downstream direction, while the opposite direction will be referred to as upstream direction. Fig. 2 illustrates a system model of a system according to an embodiment which will be used in the following explanations. The system model of Fig. 2 illustrates transmission in downstream direction from a distribution point 20 or similar provider equipment to a plurality of CPE receivers 22A, 22B, 22C via a corresponding plurality of transmission lines 26A, 26B, 26C. While three transmission lines and three CPE receivers are shown in Fig. 2, as indicated by dots this is again merely an example, and as indicated by dots in Fig. 2 any appropriate number of CPE receivers and communication lines may be present.

On the side of distribution point 20, which in the downstream direction example of Fig. 2 corresponds to the transmitter side, a symbol vector **u** comprising a symbol for each line (therefore **u** has L components for L lines) is scaled according to a diagonal scaling matrix **S,** as symbolized by amplifiers 23A, 23B and 23C. $\mathbf{u}^{(k),[t]}$ is the value of the symbol vector **u** for subcarrier k at time t, and **S**(k) is the scaling for the respective subcarrier k. Therefore, k represents a tone number, as xDSL systems transmission is divided between a plurality of tones, also referred to as frequency subchannels or subcarriers. The scaling by scaling matrix **S** determines a relative transmit power and/or a power spectral density (PSD) for the symbol intended for the various communication lines 26A to 26C. In a precoder 24, the resulting vector **S** x **u** is multiplied by a precoder matrix **P** having non-diagonal elements to precompensate crosstalk. Determination of the precoder matrix **P** may be performed based on a channel estimation or other techniques as will be explained below, which involves transmitting predetermined training signal sequences and may for example include measuring an error between received symbols and transmitted symbols. The symbols **x** output by precoder 24 are subjected to an inverse fast Fourier transform (IFFT) represented by blocks 25A, 25B, 25C and then transmitted on lines 26A, 26B, 26C.

Some or all of lines 26A to 26C may run in a cable binder 21, where they are close to each other and therefore prone to crosstalk, as indicated by dashed arrows 27. The crosstalk and other effects on the transmission lines like alternation may be represented by a channel matrix **H.** in an ideal case, crosstalk represented by the channel matrix **H** is cancelled out completely by the precompensation corresponding to matrix **P.** In a non-ideal case, some amount of crosstalk may remain. In addition, during transmission and at receivers 22A to 22C, noise **n** may be added. Additive receiver noise **n** is symbolized by adders 28A, 28B, 28C. It is to be noted that no explicit adders are provided, but this is merely a representation of additive noise, which adds **n.**

The symbols received via lines 26A to 26C at the CPE receiver side are provided to analog front-ends 29A, 29B, 29C, respectively, and subjected to a fast Fourier transform (FFT) 210A, 210B, 210C. The resulting symbols **y** are equalized according to an equalizer matrix **G** as symbolized by amplifiers 211A, 211B, 211C. Equalizer matrix **G** may also include a component compensating the spectrum shaping applied by matrix **G** at the transmitter site. It should be noted that in some embodiments, there may be more blocks scaling the transmitted symbols. Also, signal processing blocks like analog front ends or a fast Fourier transform and other operation may contribute to the overall receiver gain, which is included in the matrix **G.** The result is a received signal for each receiver which may be represented as a vector **û,** each component of **û** corresponding to a received symbol of one receiver. In case of absolutely error free and noise free transmission, **û** would correspond to **u.**

Therefore, the receive signal vector **u** is given by

$$\hat{u}^{(k),[t]} = G^{(k)}(H^{(k)}P^{(k)}S^{(k)}u^{(n),[t]} + n^{(k),[t]}) \qquad (1)$$

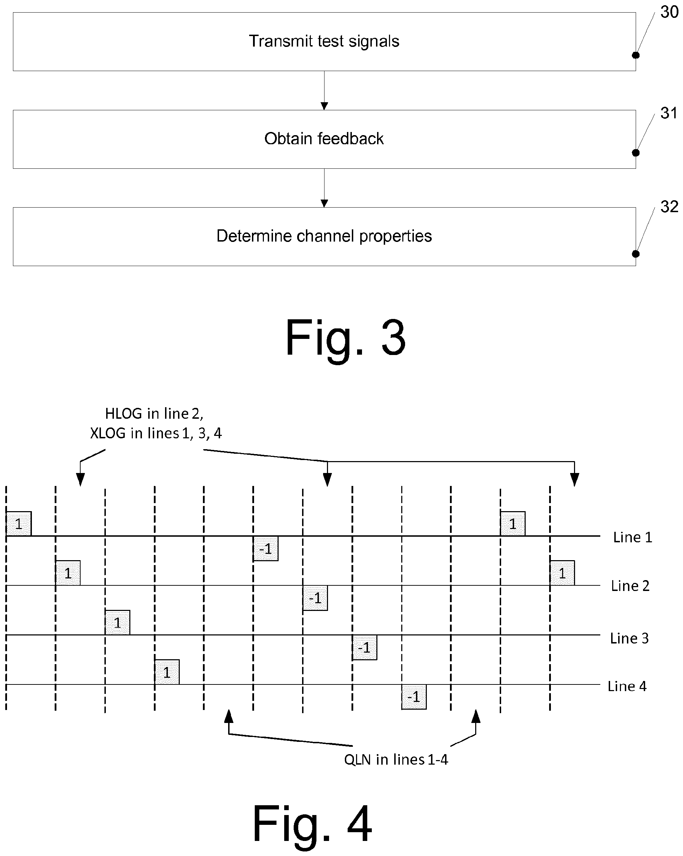

In embodiments, a testing is performed to obtain channel properties like channel attenuation, channel crosstalk coupling strength and background noise variants contributed by the receivers and by the environment. Fig. 3 illustrates a flowchart generally outlining the way such tests are performed. Details will be discussed further below.

At 30 in Fig. 3, test signals, which may comprise predetermined test sequences for each line and/or each subcarrier, are transmitted. Such test signals, also referred to as training signal herein, may for example be inserted at the input of gain scaling (23A-23C in Fig. 2) or between the precoder 24 and the inverse fast Fourier transform blocks 25A, 25B, 25C.

At 31, feedback is obtained. The feedback may comprise an indication, e.g. value of the received signal, or an indication of a difference between the transmitted test signals and received signals. The received signals may for example be tapped at the output of fast Fourier transforms 210A, 210B, 210C or at the output of the equalizer represented by matrix **G,** i.e. at the outputs of 211A, 211B, 211C, to generate the feedback.

At 32, channel properties, e.g. test parameters describing channel properties, are determined based on the feedback.

In embodiments, transmitter gain and receiver gain are compensated for getting information on channel and noise, such that transmitter gain and receiver gain (matrixes **S** and **G**) do not influence test parameters obtained based on the feedback.

Next, test parameters which are determined in some embodiments. In particular, three parameters that may be used are analyzed in further detail. These are the logarithmic channel transfer function $HLOG^{(k)}$ as a function of frequency or the corresponding subcarrier $k$. It is given by

$$HLOG_l^{(k)} = 20log_{10}|H_{ll}^{(k)}| \qquad (2)$$

Furthermore, the channel gain matrix $\textbf{\textit{XLOG}}^{(k)}$ which is defined as

$$\textbf{\textit{XLOG}}^{(k)} = 20log_{10}|\textbf{\textit{H}}^{(k)}\text{diag}(\text{diag}(\textbf{\textit{H}}^{(k)}))^{-1}| \qquad (3)$$

and the quiet line noise $QLN_l^{(k)}$ which is equal to the noise variance of the noise signal $n_l^{(k)}$. All or some of these signals in embodiments may be derived from the measurement and suitable training signals.

Examples for suitable training signals will be described next. G.fast systems transmit SYNC symbols (synchronization symbols) at the begin of each superframe. These symbols do not contain user data, but a known content that is equal for all lines. For the multicarrier system with $N$ subcarriers, this is the signal $u_{\text{base}}^{(1)},...,u_{\text{base}}^{(k)},...,u_{\text{base}}^{(N)}$ In addition to that, the SYNC symbols are multiplied with a probe sequence (test signals) that can be different for each line. The probe sequence elements can have the values +1, -1 or 0.

The measurement of direct channel attenuation, crosstalk channel attenuation and quiet line noise in embodiments is performed over multiple SYNC symbols.

We assume a system of $L$ lines. Then, $L$ different probe sequences are required. The probe sequence of length $T$ in some embodiments is built of an orthogonal part and a quiet part, such as in example equation (4).

$$\begin{matrix} & & & \overset{11}{\phantom{+1}} & & & & & \\ w_1 & +1 & 0 & 0 & 0 & 0 & 0 & 0 & 0 \\ w_2 & 0 & +1 & 0 & 0 & 0 & 0 & 0 & 0 \\ w_3 & 0 & 0 & +1 & 0 & 0 & 0 & 0 & 0 \\ w_4 & 0 & 0 & 0 & +1 & 0 & 0 & 0 & 0 \end{matrix}$$
$$\underbrace{\phantom{+1\ 0\ 0\ 0}}_{\text{Orthogonal}} \quad \underbrace{\phantom{0\ 0\ 0\ 0}}_{\text{quiet}} \qquad (4)$$

In this example, $T = 8$. $w_1$, $w_2$, $w_3$, and $w_4$ are four sequences ($L = 4$ in this example).

The actual transmit signal for time instance $t$, subcarrier $k$ and line $l$ is then given by

$$u_l^{[t],(k)} = u_{\text{base}}^{(k)}w_l^{[t]} \qquad (5)$$

In another embodiment, the orthogonal part of the sequence may be inverted, containing -1-elements.

In another embodiment, the orthogonal part may contain an orthogonal sequence without zero-elements, and a quiet part, with only zero elements e.g.,

$$\begin{matrix} w_1 & +1 & +1 & +1 & +1 & 0 & 0 & 0 & 0 \\ w_2 & +1 & +1 & -1 & -1 & 0 & 0 & 0 & 0 \\ w_3 & +1 & -1 & -1 & +1 & 0 & 0 & 0 & 0 \\ w_4 & +1 & -1 & +1 & -1 & 0 & 0 & 0 & 0 \end{matrix}$$
$$\underbrace{\phantom{+1\ +1\ +1\ +1}}_{\text{Orthogonal}} \quad \underbrace{\phantom{0\ 0\ 0\ 0}}_{\text{quiet}} \qquad (6)$$

The signal $u_l^{(k),[t])}$ may be used as an input in Fig. 2 and processed through the gain-scaling (23A-23C), the precoder (24) and the IFFT (25A-25C) at the transmitter side, which changes the the original transmit signal. This distortion of the transmit signal is not known to the reciever.

In another embodiment, the quiet line noise measurement sequence is interleaved with the orthogonal sequence. An example for this is shown in Fig. 4. The 1, -1 values shown are part of orthogonal sequences, while columns without 1 or -1 correspond to the quiet part. Examples are noted where HLOG, XLOG and QLN parameters may be determined. The orthogonal part of the sequence can be used for direct channel and crosstalk measurement, but also for coefficient update (i.e. update of precoder coefficients). The quiet part can be used to measure background noise (QLN) in each line, since no crosstalk from all other lines is involves (0 transmission on all lines).

The methods described are used on a multicarrier system with a set of carriers k=1,...,K. In one embodiment, the quiet line noise measurement may be done on some of the subcarriers, e.g., every 8th subcarrier, while the other carriers are used to update precoder coefficients. On the subcarriers used for coefficient update, sync symbols are modulated with an orthogonal sequence while for the carriers used for quiet line measurement, zero-symbols are transmitted.

In another embodiment, different test parameters can be measured on different carriers by applying different special probe sequences, e.g., every 8-th subcarrier can be used for QLN measurement, every 8-th +1 subcarrier for HLOG measurements, every 8-th + 2 subcarrier for XLOG measurements, and others for channel estimation.

As explained above, the receivers (for example receivers 22A, 22B, 22C in Fig. 2) receive the test signals (for example synchronization symbols multiplied with probe sequences as explained above), evaluate them and give feedback back to provider equipment, for example distribution point 20. For example, feedback may be given to an evaluation circuit 212 indicated in Fig. 2 via a feedback channel (back channel) indicated by 213 in Fig. 2. In xDSL implementations, the feedback channel uses the same physical lines as the transmission of the test signals, but is in the other direction (for example upstream direction in Fig. 2). Details of this feedback will be described next.

The receiver (e.g. 22A, 22B, 22C in Fig. 2) can measure the received frequency domain signal after the FFT operation (e.g. 210A, 210B, 210C) or another appropriate point. This signal is refered to as $y_l^{(k),[t]}$. The signals of all lines $l = 1,...,L$ can be collected to vectors $u^{[t],(k)}$, $x^{[t],(k)}$ and $y^{[t],(k)}$. Then,

$$x^{[t],(k)} = P^{(k)} S^{(k)} u^{[t],(k)} \qquad (7)$$

and

$$y^{[t],(k)} = A^{(k)} \left( H^{(k)} x^{[t],(k)} + n^{[t],(k)} \right) \qquad (8)$$

where the receiver gains are collected in diagonal matrices $A^{(k)} = \mathrm{diag}\left( a_1^{(k)},...,a_L^{(k)} \right).$

It should be noted that **x** and **y** may have complex components (i.e. components which have complex numbers).

The channel feedback required to measure the link quality parameters HLOG, XLOG and QLN is calculated from the signal $y^{(n),[t]}$. To reduce the amount of data to be transmitted from the transmitter to the receiver, in embodiments a special feedback signal $\tilde{y}_l^{(k),[t]}$ is used to measure these test parameters, which is equivalent to the received signal at the end of the line, at the AFE (e.g. 29A, 29B, 29C) input. It can be derived from the FFT output signal $y^{[t],(k)}$ by

$$\tilde{y}_l^{(k),[t]} = \frac{y_l^{(k),[t]}}{a_l^{(k)}} \qquad (9)$$

or from the final receive signal $\hat{u}^{[t],(k)}$ by

$$\tilde{y}_l^{(k),[t]} = \frac{y_l^{(k),[t]}}{a_l^{(k)} g_l^{(k)}}.$$

(10)

In one embodiment, the feedback channel transmits a quantized complex version of $Q\left(\tilde{y}_l^{(k),[t]}\right)$ back to the DP, where the quantization operation Q(.) may be a fixed-point or a floating point representation.

In another embodiment, only the absolute of the signal $Q\left(\left|\tilde{y}_l^{(k),[t]}\right|\right)$ is used as a feedback signal. This has the advantage that more bits can be used to represent each frequency sample and an increased dynamic range is achieved in comparison to the complex representation.

In other embodiments, the feedback may just comprise information regarding the received signals, and error signals or any other relationship between sent and received signals may be made at the transmitter.

The feedback may be transmitted as a so-called feedback message. An example for a format of the feedback message will be described next.

The feedback message in embodiments may contain the real-valued or complex-valued samples as defined in Eq. (10) above. The samples of a group of carriers k in embodiments are collected and communicated to the DP in one or more messages. These samples in embodiments may be scaled with a common scaling factor $p_{ref}$ [dBm/Hz], which refers to a desired reference PSD value in [dBm/Hz] at the input of the receiver. The received samples after FEQ $\hat{u}$ are used as reference in an embodiment. In some embodiments, they are scaled to unit power. Furthermore, the tone spacing is assumed to be $f_{tone}$. In embodiments, the PSD is converted to power per (sub)carrier.

The communicated sample values $Q(\tilde{y}_1^{(k),[t]})$ may be scaled with a factor:

$$Q\left(\tilde{y}_1^{(k),[t]}\right) / \left(10^{\text{pref[dBm/Hz]}/20} \sqrt{f_{tone}}\right).$$

In one embodiment, the value $p_{ref}$ is seleced by the receiver with respect to the values of particular samples communicated in the message and it is communicated together with the associated sample values $Q(\tilde{y}_1^{(k),[t]})$ as a part of the message. Selection of appropriate mutual value of $p_{ref}$ for the communicated group of samples allows to reduce the size of the message e.

In another embodiment, in case DP requests a certain type of test parameters to be reported, the value of $p_{ref}$ may be communicated by the DP together with the request: for instance if requested test parameter is QLN, the value of $p_{ref}$ may be substantially lower than in case the requested test parameter is the received signal.

Next, calculation of the test parameters mentioned above based on the feedback signals/messages will be discussed. It should be noted that corresponding calculations are made at the transmitter in some embodiments (for example in evaluation circuit 212 in Fig. 2), but in other embodiments may also be performed at the receiver side. The calculation may be performed by any suitable circuits, for example digital signal processors, application-specific integrated circuits (ASICs), specifically programmed general purpose processors etc.

In some embodiments, the DP (e.g. 20) receives the feedback signals $|\tilde{y}_l^{(k),[t]}|$ or $\tilde{y}_l^{(k),[t]}$ from the connected receivers (e.g. 22A-22C). We now discuss methods how to derive the corresponding receiver parameters from that.

The value of $HLOG_l^{(k)}$ can be approximated in embodiments by

$$HLOG_l^{(k)} \approx 20 log_{10} \left(\frac{|\tilde{y}_l^{(k),[t]}|}{|u_l^{(k),[t]}|}\right) \text{ for } w_l^{[t]} \neq 0$$

(11)

where the influence of noise $n_l^{(k)}$ is neglected.

Quiet line noise $QLN_l^{(k)}$ can be evaluated by averaging over the received signal of line *l* for multiple symbols where all the lines *l* = 1,...,*L* transmit the zero-symbol.

$$QLN_l^{(k)} \approx 10log_{10} \left( \frac{1}{|\mathbb{T}_0|} \sum_{t \in \mathbb{T}_0} \left| \tilde{y}_l^{(k),[t]} \right|^2 \right).$$

$$(12)$$

The set

$$\mathbb{T}_0 = \{t : w_l^{[t]} = 0 \forall l = 1,...,L\}$$

contains the symbols where all the lines transmit the zero probe sequence element and $|\mathbb{T}_0|$ is the number of such symbols.

Finally, the crosstalk matrix **XLOG** can be measured with this method. In an embodiment, in a first step, the linear values **HLIN**$^{(k)}$ are collected. This is done by collecting one column of the **XLIN** matrix

$$HLIN_{vl}^{(k)} = \frac{|\tilde{y}_v^{(k),[t]}|}{|u_l^{(k),[t]}|} \text{ for } w_l^{[t]} \neq 0.$$

$$(13)$$

In case that there are transmitter gains which shall be compensated, the value of Eq. (13) is divided by the additional transmitter gain to be considered. In case that only the scaling **S** must be considered, this is

$$HLIN_{vl}^{(k)} = \frac{|\tilde{y}_v^{(k),[t]}|}{|u_l^{(k),[t]} s_l^{(k)}|} \text{ for } w_l^{[t]} \neq 0.$$

$$(14)$$

wherein $s_l$ are components of **S**.

In the next step, they are normalized and collected in the **XLOG** with logarithmic scale

$$XLOG_{vl} = 20log_{10} \left( \frac{HLIN_{vl}^{(k)}}{HLIN_{vv}^{(k)}} \right).$$

$$(15)$$

A third measurement that can be performed in this context is the noise correlation. With the complex feedback $Q\left(\tilde{y}_l^{(k),[t]}\right)$, the noise covariance matrix $C_n$ is obtained by

$$C_n^{(k)} = \frac{1}{|\mathbb{T}_0|} \sum_{t \in \mathbb{T}_0} \tilde{y}^{(k),[t]} \tilde{y}^{H,(k),[t]}.$$

$$(16)$$

In case that the scaled FFT report is only available as absolute value, the un-scaled (normal) FFT report can also be used to perform the correlation measurement. To come to the correct absolute values, the result matrix can be scaled according to the diagonal elements of $C_n^{(k)}$, which are equal to the QLN measurement with the correct scaling.

As can be seen, in particular the parameters HLOG, QLN and the matrix **XLOG** may be determined based on the absolute values $|\tilde{y}|$, such that feedback of the complex values is not necessarily required.

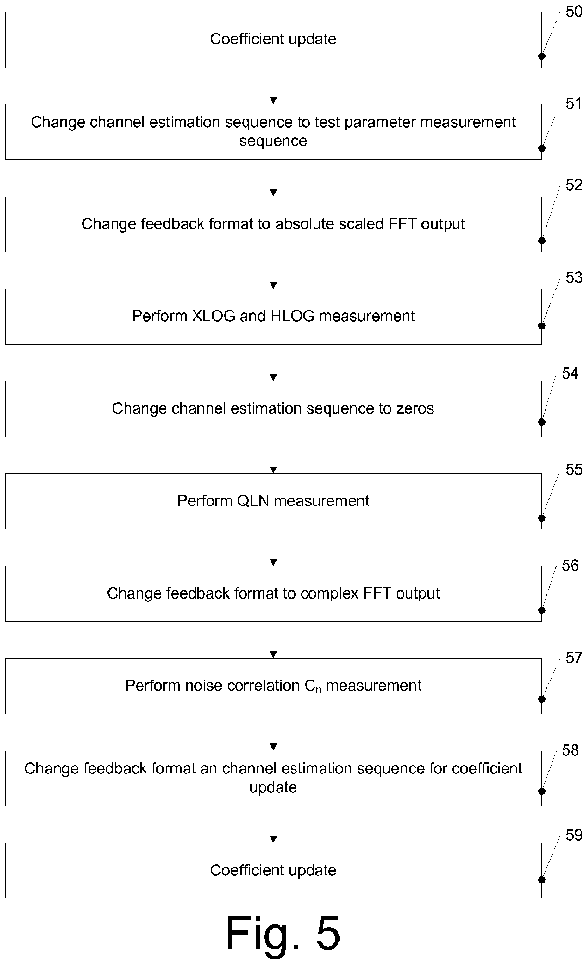

In embodiments, the sync symbols and the corresponding feedback channels used for performance measurement are also used to update the transmitter settings such as the precoder **P**. However, the coefficient update may require a different sequence $w_l$. Therefore, in embodiments the test parameter measurements are interleaved with the coefficient update in time. A corresponding method will now be explained with reference to Fig. 5.

At 50, a coefficient update of a precoder is performed. At 51, the channel estimation sequence is changed to a test parameter measurement sequence, for example the sequences explained with reference to equations (4) to (6) are as illustrated in Fig. 4. At 52, optionally the feedback format is changed to absolute scaled fast Fourier transformation output, i.e. only absolute values of $\tilde{y}$ are fed back as explained above.

At 53, the **XLOG** and HLOG measurements as explained above are performed. At 54, the channel estimation sequence is changed to zeros, corresponding to the quiet part of equations (4) and (6). At 55, the method then comprises performing QLN measurements as discussed above. Instead of performing the **XLOG** and HLOG measurements and the QLN measurements one after the other with sequences as illustrated in equations (4) and (6) as examples, also an interleaved measurement as illustrated in Fig. 4 may be performed in other embodiments.

At 56, the feedback format is changed to complex values of the FFT output, i.e. $\tilde{y}$. At 57, the method then comprises performing noise correlation measurements, for example as illustrated in equation (16).

At 58, the method then comprises changing the feedback format and channel estimation sequence to estimation sequences and feedback formats appropriate for coefficient updates. These estimation sequences and feedback formats may be any estimation sequences and feedback formats conventionally used for coefficient update. At 59, the method again updates coefficients, which corresponds to 50. In other words, the method may be performed repeatedly.

To guarantee a short interruption of the coefficient updates, the measurements at 53 to 57 in Fig. 5 may be interrupted to continue with coefficient updates in some embodiments.

In another embodiment, the defined special probe sequence includes parts defined for measurement of test parameters and a parts defined for channel estimation. The DP, which is in control, indicates to the CPE which elements of the probe sequence are intended for a particular action, such as a number of the probe sequence element or a bit map. By this, the DP indicates to the CPE a particular type of the measurement to be sent: for probe sequence elements intended for test parameter measurements, the CPE provides samples of the input signal at the CPE receiver, while for probe sequence elements intended for channel estimation, the CPE may be required to send back error samples, measured at the decision point to identify crosstalk channel. The CPE reports associated with test parameters and with channel estimation parameters can be sent back together, inside the same backchannel format, or separately, using independent messages of the overhead channel.

As evident from the above description of variations and alternatives, the above described embodiments serve only as non-limiting examples, and implementations are possible in numerous ways. Therefore, the above described embodiments are not to be construed as limiting.

### Claims

1. A method, comprising:

    transmitting test sequences on a plurality of communication lines, l= 1,...,L (12A-12D; 26A-26C), wherein the test sequences comprise a first sequence portion, where the test sequences for different communication lines (12A-12D; 26A-26C) are orthogonal, and a second sequence portion, wherein the test sequence values are zero for all communication lines (12A-12D; 26A-26C),
    receiving feedback in response to transmitting the test sequences, and
    evaluating transmission channel parameters based on the feedback, **characterized in that**
    evaluating transmission channel parameters comprises determining a logarithmic channel transfer function $HLOG^{(k)}$ as a function of subcarrier k and
    determining a channel gain matrix $\mathbf{XLOG}^{(k)}$ as a function of subcarrier k based on the first sequence portion and determining a quiet line noise $QLN_l^{(k)}$ which is equal to a noise variance of a noise signal on a line 1 for a subcarrier k based on the second sequence portion.

2. The method of claim 1, wherein transmitting the test sequences comprises transmitting the test sequences as synchronization symbols multiplied with test sequence values.

3. The method of claim 1 or 2, wherein the second sequence portion follows the first sequence portion or is interleaved with the first portion.

4. The method of any one of claims 1 to 3, wherein receiving feedback comprises receiving values of received symbols after a fast Fourier transform at a receiver.

5. The method of claim 4, wherein the values after the fast Fourier transform are received as absolute values.

6. The method of claim 4, wherein the values after fast Fourier transform are received selectively as absolute values or as complex values depending on a parameter to be determined in said evaluating.

7. The method of any one of claims 4 to 6, further comprising providing a scaling for said values.

8. The method of any one of claims 1-7, wherein $HLOG_l^{(k)}$, 1 being a line number, is defined as $20\log_{10}|H_{ll}^{(k)}|$, wherein **H** is the channel matrix, wherein determining $HLOG_l^{(k)}$ comprises approximating $HLOG_l^{(k)}$, 1 being the line number, as

$$HLOG_l^{(k)} \approx 20log_{10}\left(\frac{|\tilde{y}_l^{(k),[t]}|}{|u_l^{(k),[t]}|}\right) \text{ for } w_l^{[t]} \neq 0$$

wherein $|\tilde{y}_l^{(k),[t]}|$ is an absolute feedback value received at the receiving feedback, $u_l^{(k),[t]}$ is a transmitted symbol of the test sequence, and $w_l^{[t]}$ is a factor of a corresponding test sequence element.

9. The method of any one of claims 1-8, wherein **XLOG**$^{(k)}$ is defined as

$$\mathbf{XLOG}^{(k)} = 20log_{10}|\mathbf{H}^{(k)}\text{diag}(\text{diag}(\mathbf{H}^{(k)}))^{-1}|,$$

wherein **H** is the channel matrix, wherein n determining **XLOG**$^{(k)}$ comprises estimating **XLOG**$^{(k)}$ as

$$XLOG_{vl} = 20log_{10}\left(\frac{HLIN_{vl}^{(k)}}{HLIN_{vv}^{(k)}}\right).$$

wherein

$$HLIN_{vl}^{(k)} = \frac{|\tilde{y}_v^{(k),[t]}|}{|u_l^{(k),[t]}|} \text{ for } w_l^{[t]} \neq 0.$$

or

$$HLIN_{vl}^{(k)} = \frac{|\tilde{y}_v^{(k),[t]}|}{|u_l^{(k),[t]}s_l^{(k)}|} \text{ for } w_l^{[t]} \neq 0.$$

wherein $u_l$ are transmitted values of the test sequences, $|\tilde{y}_v^{(k),[t]}|$ are absolute feedback values, $w_l^{[t]}$ are test sequence values and $s_l^{(k)}$ are gain matrix values.

10. The method of any one of claims 1-9, wherein $QLN_l^{(k)}$ is estimated as

$$QLN_l^{(k)} \approx 10log_{10}\left(\frac{1}{|\mathbb{T}_0|}\sum_{t\in\mathbb{T}_0}|\tilde{y}_l^{(k),[t]}|^2\right).$$

wherein the set

$$\mathbb{T}_0 = \{t : w_l^{[t]} = 0 \forall l = 1,...,L\}$$

contains symbols where all lines transmit a 0 test sequence element and $|\mathbb{T}_0|$ is the number of such symbols, wherein $\tilde{y}_l^{(k),[t]}$ are' feedback values.

**11.** A transceiver device (10; 20), comprising:

a plurality of transceivers configured to transmit test sequences on a plurality of communication lines, l= 1,...,L (12A-12D; 26A-26C) and receiving feedback via the plurality of communication lines (12A-12D; 26A-26C), wherein the test sequences comprise a first sequence portion, where the test sequences for different communication lines (12A-12D; 26A-26C) are orthogonal, and a second sequence portion, wherein the test sequence values are zero for all communication lines (12A-12D; 26A-26C),
an evaluation circuit configured to evaluate transmission channel parameters based on the feedback, **characterized in that**
evaluating transmission channel parameters comprises determining a logarithmic channel transfer function $HLOG^{(k)}$ as a function of subcarrier k and
determining a channel gain matrix **XLOG**$^{(k)}$ as a function of subcarrier k based on the first sequence portion and determining a quiet line noise $QLN_l^{(k)}$ which is equal to a noise variance of a noise signal on a line 1 for a subcarrier k based on the second sequence portion.

**12.** The device (10; 20) of claim 11, wherein the device is a distribution point.

**13.** The device (10; 20) of claim 11 or 12, wherein the device is adapted to perform the method of any one of claims 1 to 10.

**14.** A communication system, comprising:

a first transceiver device (10; 20) as defined in any one of claims 11 to 13, and
a plurality of second transceiver devices (13A-13D; 22A-22C) coupled to the first transceiver device, each second transceiver device (13A-13D; 22A-22C) comprising:

a transceiver configured to receive a test sequence on a communication line and to transmit feedback based on a signal after a fast Fourier transformer in a receive path of the transceiver.

**15.** The communication system of claim 14,
wherein each second transceiver device (13A-13D; 22A-22C) is configured to transmit the feedback as absolute feedback values, or selectively as absolute or as complex values depending on a parameter to be determined in said evaluating.

**Patentansprüche**

**1.** Verfahren, umfassend:

Übertragen von Testsequenzen auf einer Vielzahl von Kommunikationsleitungen l = 1,...,L (12A-12D, 26A-26C), wobei die Testsequenzen einen ersten Sequenzabschnitt, bei dem die Testsequenzen für verschiedene Kommunikationsleitungen (12A-12D, 26A-26C) orthogonal sind, und einen zweiten Sequenzabschnitt, bei dem die Testsequenzwerte für alle Kommunikationsleitungen (12A-12D, 26A-26C) null sind, umfassen,
Empfangen einer Rückkopplung in Sequenzen, und
Bewerten einer Übertragungskanalparameter-Rückkopplung, **dadurch gekennzeichnet, dass**
das Bewerten von Übertragungskanalparametern das Bestimmen einer logarithmischen Kanalübertragungsfunktion $HLOG^{(k)}$ als eine Funktion des Unterträgers k umfasst, und
Bestimmen einer Kanalverstärkungsmatrix **XLOG**$^{(k)}$ als eine Funktion des Unterträgers k basierend auf dem ersten Sequenzabschnitt und Bestimmen eines Ruheleitungsrauschens (Quiet Line Noise) $QLN_l^{(k)}$, das gleich einer Rauschvarianz eines Rauschsignals auf einer Leitung l für einen Unterträger k ist, basierend auf dem zweiten Sequenzabschnitt.

**2.** Verfahren nach Anspruch 1, wobei das Übertragen der Testsequenzen das Übertragen der Testsequenzen als Synchronisationssymbole multipliziert mit Testsequenzwerten umfasst.

3. Verfahren nach Anspruch 1 oder 2, wobei der zweite Sequenzabschnitt dem ersten Sequenzabschnitt folgt oder mit dem ersten Abschnitt verschachtelt ist.

4. Verfahren nach einem der Ansprüche 1 bis 3, wobei das Empfangen der Rückkopplung das Empfangen von Werten von empfangenen Symbolen nach einer schnellen Fourier-Transformation bei einem Empfänger umfasst.

5. Verfahren nach Anspruch 4, wobei die Werte nach der schnellen Fourier-Transformation als absolute Werte empfangen werden.

6. Verfahren nach Anspruch 4, wobei die Werte nach der schnellen Fourier-Transformation selektiv als absolute Werte oder als komplexe Werte in Abhängigkeit von einem Parameter empfangen werden, der bei der Bewertung bestimmt werden soll.

7. Verfahren nach einem der Ansprüche 4 bis 6, ferner umfassend das Bereitstellen einer Skalierung für die Werte.

8. Verfahren nach einem der Ansprüche 1 bis 7, wobei $HLOG_l^{(k)}$, wobei l eine Zeilennummer ist, als $20\log_{10}|H_{ll}^{(k)}|$ definiert ist, wobei **H** die Kanalmatrix ist, wobei das Bestimmen von $HLOG_l^{(k)}$ das Annähern an $HLOG_l^{(k)}$ umfasst,

$$HLOG_l^{(k)} \approx 20log_{10}\left(\frac{|\tilde{y}_l^{(k),[t]}|}{|u_l^{(k),[t]}|}\right) \quad w_l^{[t]} \neq 0$$

wobei l die Zeilennummer ist, als $\quad$ for $\quad$ , wobei $|\tilde{y}_l^{(k),[t]}|$ ein absoluter Rückkopplungswert ist, der bei der empfangenen Rückkopplung empfangen wird, $u_l^{(k),[t]}$ ein übertragenes Symbol der Testsequenz ist und $w_l^{[t]}$ ein Faktor eines entsprechenden Testsequenzelements ist.

9. Verfahren nach einem der Ansprüche 1 bis 8, wobei $XLOG^{(k)}$ definiert ist als

$$XLOG^{(k)} = 20log_{10}|H^{(k)}\mathrm{diag}(\mathrm{diag}(H^{(k)}))^{-1}|,$$

wobei **H** die Kanalmatrix ist, wobei das Bestimmen von **XLOG(k)** durch n das Bestimmen von **XLOG(k)** als

$$XLOG_{vl} = 20log_{10}\left(\frac{HLIN_{vl}^{(k)}}{HLIN_{vv}^{(k)}}\right)$$ umfasst, wobei

$$HLIN_{vl}^{(k)} = \frac{|\tilde{y}_v^{(k),[t]}|}{|u_l^{(k),[t]}|} \quad \text{for } w_1^{[t]} \neq 0$$

oder

$$HLIN_{vl}^{(k)} = \frac{|\tilde{y}_v^{(k),[t]}|}{|u_l^{(k),[t]}s_l^{(k)}|} \quad \text{for } w_1^{[t]} \neq 0 \quad ,$$

wobei $u_l$ übertragene Werte der Testsequenzen sind, $|\tilde{y}_v^{(k),[t]}|$ absolute Rückkopplungswerte sind, $w_l^{[t]}$ Testsequenzwerte sind und $s_l^{(k)}$ Verstärkungsmatrixwerte sind.

10. Verfahren nach einem der Ansprüche 1 bis 9, wobei $QLN_l^{(k)}$ geschätzt wird als

$$QLN_l^{(k)} \approx 10 log_{10} \left( \frac{1}{|\mathbb{T}_0|} \sum_{t \in \mathbb{T}_0} \left| \tilde{y}_l^{(k),[t]} \right|^2 \right),$$

$$\mathbb{T}_0 = \{ t : w_l^{[t]} = 0 \forall l = 1,...,L \}$$

wobei der Satz $\qquad$ Symbole enthält, wobei alle Leitungen ein 0-Testsequenzelement übertragen, und $|\mathbb{T}_0|$ die Anzahl solcher Symbole ist, wobei $\tilde{y}_l^{(k),[t]}$ Rückkopplungswerte sind.

11. Transceivervorrichtung (10, 20), umfassend:

eine Vielzahl von Transceivern, die konfiguriert sind, um Testsequenzen auf einer Vielzahl von Kommunikationsleitungen l = 1,...,L (12A-12D, 26A-26C) zu übertragen und eine Rückkopplung über die Vielzahl von Kommunikationsleitungen (12A-12D, 26A-26C) zu empfangen,
wobei die Testsequenzen einen ersten Sequenzabschnitt, bei dem die Testsequenzen für verschiedene Kommunikationsleitungen (12A-12D, 26A-26C) orthogonal sind, und einen zweiten Sequenzabschnitt, bei dem die Testsequenzwerte für alle Kommunikationsleitungen (12A-12D, 26A-26C) null sind, umfassen,
eine Bewertungsschaltung, die konfiguriert ist, um Übertragungskanalparameter basierend auf der Rückkopplung zu bewerten,
**dadurch gekennzeichnet, dass**
das Bewerten von Übertragungskanalparametern das Bestimmen einer logarithmischen Kanalübertragungsfunktion HLOG$^{(k)}$ als eine Funktion des Unterträgers k umfasst, und
Bestimmen einer Kanalverstärkungsmatrix **XLOG$^{(k)}$** als eine Funktion des Unterträgers k basierend auf dem ersten Sequenzabschnitt, und
Bestimmen eines Ruheleitungsrauschens QLN$_l^{(k)}$, das gleich einer Rauschvarianz eines Rauschsignals auf einer Leitung l für einen Unterträger k ist, basierend auf dem zweiten Sequenzabschnitt.

12. Vorrichtung (10, 20) nach Anspruch 11, wobei die Vorrichtung ein Verteilungspunkt ist.

13. Vorrichtung (10, 20) nach Anspruch 11 oder 12, wobei die Vorrichtung dazu vorgesehen ist, das Verfahren nach einem der Ansprüche 1 bis 10 durchzuführen.

14. Kommunikationssystem, umfassend:

eine erste Transceivervorrichtung (10, 20) nach einem der Ansprüche 11 bis 13, und
eine Vielzahl von zweiten Transceivervorrichtungen (13A-13D, 22A-22C), die mit der ersten Transceivervorrichtung gekoppelt sind, wobei jede der zweiten Transceivervorrichtungen (13A-13D, 22A-22C) umfasst:

einen Transceiver, der konfiguriert ist, um eine Testsequenz auf einer Kommunikationsleitung zu empfangen und eine Rückkopplung basierend auf einem Signal nach einem schnellen Fourier-Transformator auf einem Empfangspfad des Transceivers zu übertragen.

15. Kommunikationssystem nach Anspruch 14,
wobei jede zweite Transceivervorrichtung (13A-13D, 22A-22C) konfiguriert ist, um die Rückkopplung als absolute Rückkopplungswerte oder selektiv als absolute oder als komplexe Werte in Abhängigkeit von einem Parameter zu übertragen, der bei der Bewertung bestimmt werden soll.

**Revendications**

1. Procédé, comprenant les étapes suivantes :

transmettre des séquences de test sur une pluralité de lignes de communication l = 1, ..., L (12A-12D ; 26A-26C), où les séquences de test comprennent une première partie de séquence, où les séquences de test pour différentes lignes de communication (12A-12D ; 26A-26C) sont orthogonales, et une seconde partie de séquence, où les valeurs des séquences de test sont nulles pour toutes les lignes de communication (12A-12D ; 26A-26C), recevoir une rétroaction en réponse à la transmission des séquences de test, et

évaluer des paramètres de canal de transmission sur la base de la rétroaction, **caractérisé en ce que** l'évaluation des paramètres de canal de transmission comprend de déterminer une fonction de transfert de canal logarithmique HLOG$^{(k)}$ comme fonction d'une sous-porteuse k, et

déterminer une matrice de gain de canal XLOG$^{(k)}$ comme fonction d'une sous-porteuse k basée sur la première partie de séquence et déterminer un bruit de ligne silencieuse QLN$_1$$^{(k)}$ qui est égal à une variance de bruit d'un signal de bruit sur une ligne l pour une sous-porteuse k basée sur la seconde partie de séquence.

2. Procédé selon la revendication 1, dans lequel la transmission des séquences de test comprend de transmettre les séquences de test sous la forme de symboles de synchronisation multipliés par des valeurs de séquences de test.

3. Procédé selon la revendication 1 ou la revendication 2, dans lequel la seconde partie de séquence suit la première partie de la séquence ou est entrelacée avec la première partie.

4. Procédé selon l'une quelconque des revendications 1 à 3, dans lequel la réception de la rétroaction comprend de recevoir des valeurs de symboles reçus après une transformée de Fourier rapide au niveau d'un récepteur.

5. Procédé selon la revendication 4, dans lequel les valeurs après la transformée de Fourier rapide sont reçues sous la forme de valeurs absolues.

6. Procédé selon la revendication 4, dans lequel les valeurs après la transformée de Fourier rapide sont reçues de manière sélective sous la forme de valeurs absolues ou de valeurs complexes en fonction d'un paramètre à déterminer dans ladite évaluation.

7. Procédé selon l'une quelconque des revendications 4 à 6, comprenant en outre de fournir une mise à l'échelle pour lesdites valeurs.

8. Procédé selon l'une quelconque des revendications 1 à 7, dans lequel HLOG$_l$$^{(k)}$, I étant un numéro de ligne, est défini comme 20log$_{10}$|H$_{11}$$^{(k)}$|, où H est la matrice de canal, où déterminer HLOG$_l$$^{(k)}$ comprend d'approximer HLOG$_l$(k), I étant le numéro de ligne, de la manière suivante :

$$HLOG_l^{(k)} \approx 20log_{10}\left(\frac{\left|\tilde{y}_l^{(k),[t]}\right|}{\left|u_l^{(k),[t]}\right|}\right) \texttt{ pour } \texttt{w}_1{}^{[t]} \neq 0,$$

où $\left|\tilde{y}_l^{(k),[t]}\right|$ est une valeur de rétroaction absolue reçue au niveau de la rétroaction de réception, $u_l^{(k),[t]}$ est un symbole transmis de la séquence de test, et w$_l$$^{[t]}$ est un facteur d'un élément de séquence de test correspondant.

9. Procédé selon l'une quelconque des revendications 1 à 8, dans lequel XLOG$^{(k)}$ est défini comme suit :

$$\texttt{XLOG}^{(k)} \texttt{ = } \texttt{20log}_{10}|\texttt{H}^{(k)} \texttt{ diag(diag(H}^{(k)}\texttt{))}^{-1}|,$$

où H est la matrice de canal, où n déterminant XLOG$^{(k)}$ comprend d'estimer XLOG$^{(k)}$ comme suit :

$$XLOG_{vl} = 20log_{10}\left(\frac{HLIN_{vl}^{(k)}}{HLIN_{vv}^{(k)}}\right),$$

où

$$HLIN_{vl}^{(k)} = \frac{\left|\tilde{y}_v^{(k),[t]}\right|}{\left|u_l^{(k),[t]}\right|} \texttt{ pour } \texttt{w}_1{}^{[t]} \neq 0,$$

ou

$$HLIN_{vl}^{(k)} = \frac{\left|\tilde{y}_v^{(k),[t]}\right|}{\left|u_l^{(k),[t]}s_l^{(k)}\right|} \; \text{pour } w_1^{[t]} \neq 0,$$

où les $u_l$ sont des valeurs transmises des séquences de test, $\left|\tilde{y}_v^{(k),[t]}\right|$ sont des valeurs absolues de rétroaction, $w_l^{[t]}$ sont des valeurs de séquence de test et $s_l^{(k)}$ sont des valeurs de matrice de gain.

10. Procédé selon l'une quelconque des revendications 1 à 9, dans lequel $QLN_l^{(k)}$ est estimé comme suit :

$$QLN_l^{(k)} \approx 10log_{10}\left(\frac{1}{|\mathbf{T}_0|}\sum_{t\in\mathbf{T}_0}\left|\tilde{y}_l^{(k),[t]}\right|^2\right),$$

où l'ensemble $T_0 = \{t : w_l^{[t]} = 0 \forall l = 1, ..., L\}$ contient des symboles où toutes les lignes transmettent un élément de séquence de test 0, et $|T_0|$ est le nombre de tels symboles, où $\tilde{y}_l^{(k),[t]}$ sont des valeurs de rétroaction.

11. Dispositif émetteur-récepteur (10 ; 20), comprenant :

une pluralité d'émetteurs-récepteurs configurés pour transmettre des séquences de test sur une pluralité de lignes de communication l = 1, ..., L (12A-12D ; 26A-26C) et recevoir la rétroaction par l'intermédiaire de la pluralité de lignes de communication (12A-12D ; 26A-26C),
où les séquences de test comprennent une première partie de séquence, où les séquences de test pour différentes lignes de communication (12A-12D ; 26A-26C) sont orthogonales, et une seconde partie de séquence, où les valeurs de séquence de test sont nulles pour toutes les lignes de communication (12A-12D ; 26A-26C),
un circuit d'évaluation configuré pour évaluer des paramètres de canal de transmission basés sur la rétroaction,
**caractérisé en ce que**
l'évaluation des paramètres de canal de transmission comprend de déterminer une fonction de transfert de canal logarithmique $HLOG^{(k)}$ comme fonction d'une sous-porteuse k, et
déterminer une matrice de gain de canal $XLOG^{(k)}$ comme fonction d'une sous-porteuse k basée sur la première partie de séquence et déterminer un bruit de ligne silencieuse $QLN_1^{(k)}$ qui est égal à une variance de bruit d'un signal de bruit sur une ligne l pour une sous-porteuse k basée sur la seconde partie de séquence.

12. Dispositif (10 ; 20) selon la revendication 11, dans lequel le dispositif est un point de distribution.

13. Dispositif (10 ; 20) selon la revendication 11 ou la revendication 12, dans lequel le dispositif est adapté pour exécuter le procédé de l'une quelconque des revendications 1 à 10.

14. Système de communication, comprenant :

un premier dispositif émetteur-récepteur (10 ; 20) tel que défini dans l'une quelconque des revendications 11 à 13, et
une pluralité de seconds dispositifs émetteurs-récepteurs (13A-13D ; 22A-22C) couplés au premier dispositif émetteur-récepteur, chaque second dispositif émetteur-récepteur (13A-13D ; 22A-22C) comprenant :

un émetteur-récepteur configuré pour recevoir une séquence de test sur une ligne de communication et pour transmettre une rétroaction basée sur un signal après un transformateur de Fourier rapide dans un trajet de réception de l'émetteur-récepteur.

15. Système de communication selon la revendication 14,
dans lequel chaque second dispositif émetteur-récepteur (13A-13D ; 22A-22C) est configuré pour transmettre la rétroaction sous la forme de valeurs absolues de rétroaction ou, de manière sélective, sous la forme de valeurs absolues ou complexes en fonction d'un paramètre à déterminer dans ladite évaluation.

# Fig. 1

# Fig. 2

Transmit test signals                    30

Obtain feedback                          31

Determine channel properties             32

# Fig. 3

HLOG in line 2,
XLOG in lines 1, 3, 4

1

-1

1

1

-1

1

1

-1

1

-1

Line 1

Line 2

Line 3

Line 4

QLN in lines 1-4

# Fig. 4

Fig. 5

**REFERENCES CITED IN THE DESCRIPTION**

**Patent documents cited in the description**

- US 2014328442 A1
- EP 2728819 A2
- WO 2010060086 A1